# EUROPÄISCHE PATENTSCHRIFT

(11) **EP 0 959 403 B1**
(45) Veröffentlichungstag und Bekanntmachung des Hinweises auf die Patenterteilung: **16.12.2009**
(21) Anmeldenummer: 99440116.4
(22) Anmeldetag: 19.05.1999
(51) Int. Cl.: G06F 9/40, G06F 9/42, G06F 9/46, A01K 27/00

(54) **Prozessorgesteuertes System und Verfahren zum Betrieb eines prozessorgesteuerten Systems**
Processor controlled system and method for operating a processor controlled system
Système et méthode commande par un processeur pour opérer un système commandé par un processeur

(30) Priorität: 20.05.1998 DE 19822551
(43) Veröffentlichungstag der Anmeldung: 24.11.1999
(73) Patentinhaber: Alcatel Lucent, 75008 Paris (FR)
(72) Erfinder: Jäkel, Hans-Jörg, Dr., 70439 Stuttgart (DE); Banzhaf, Monika, 70439 Stuttgart (DE); Kocher, Hartmut, Dr., 71229 Leonberg (DE)
(74) Vertreter: Brose, Gerhard

(56) Entgegenhaltungen:
- US-A- 5 572 727
- ELIASSEN F ET AL: "A MULTILAYERED OPERATING SYSTEM FOR MICROCOMPUTERS" , MICROPROCESSING AND MICROPROGRAMMING, ELSEVIER SCIENCE PUBLISHERS, BV., AMSTERDAM, NL, VOL. 14, NR. 2, PAGE(S) 45-54 XP001061607 ISSN: 0165-6074 * Seite 47, Spalte 2, Zeile 16 - Seite 49, Spalte 1, Zeile 8 *
- WALKER E F ET AL: "Asynchronous remote operation execution in distributed systems" PROCEEDINGS OF THE INTERNATIONAL CONFERENCE ON DISTRIBUTED COMPUTING SYSTEMS. PARIS, MAY 28 - JUNE 1, 1990, LOS ALAMITOS, IEEE COMP. SOC. PRESS, US, Bd. CONF. 10, 28. Mai 1990 (1990-05-28), Seiten 253-259, XP010019330 ISBN: 0-8186-2048-X
- RAMAN L G: "OSI upper layer protocol requirements for TMN operations" NETWORKS: EVOLUTION OR REVOLUTION? NEW ORLEANS, MAR. 27 - 31, 1988, PROCEEDINGS OF THE ANNUAL JOINT CONFERENCE OF THE COMPUTER AND COMMUNICATIONS SOCIETIES. (INFOCOM), NEW YORK, IEEE, US, Bd. CONF. 7, 27. März 1988 (1988-03-27), Seiten 181-185, XP010011675 ISBN: 0-8186-0833-1
- ARMSTRONG JOE: "Erlang - A survey of the language and its industrial applications" INAP'96 - THE 9TH EXHIBITIONS AND SYMPOSIUM ON INDUSTRIAL APPLICATIONS OF PROLOG, October 1996 (1996-10), pages 1-8, XP002471336 Hino, Tokyo, Japan Retrieved from the Internet: URL:http://www.erlang.se/publications/inap 96.pdf> [retrieved on 2008-03-03]

## Beschreibung

Die Erfindung betrifft ein Verfahren zum Betrieb eines prozessorgesteuerten Systems nach dem Oberbegriff des Anspruchs 1, insbesondere eines Netzwerkmanagementsystems, sowie ein prozessorgesteuertes System nach dem Oberbegriff des Anspruchs 5.

Für viele Anwendungen werden Systeme von einem oder mehreren Prozessoren gesteuert, indem diese ein Steuerprogramm wie z.B. ein Betriebssystem ausführen.
Für das Steuerprogramm wird häufig ein Aufbau aus mehreren hierarchischen angeordneten Programmschichten gewählt, wobei jede Programmschicht verschiedene Dienste anbietet und zumindest ein Teil der Dienste einer höheren Schicht auf Dienste einer niedrigeren Programmschicht aufbaut. Insbesondere für Netzwerkmanagementsysteme wird der mehrschichtige Aufbau verwendet.

Die Patentschrift US 5,572,727 mit dem Titel "Software Structure For Telecommunication Switching Systems" offenbart eine mehrschichtige Softwarearchitektur zum Einsatz in Vermittlungsstellen (sogenannten switches) von Telekommunikationssystemen.

Aus dem Artikel "A Multilayered Operating System for Microcomputers" von F. Eliassen et al, Microprocessing and Microprogramming 14 (1984) S.45-55, ist ein aus mehreren Programmschichten aufgebautes Betriebssystem für Microcomputer bekannt, bei dem Dienste einer höheren Programmschicht auf Diensten einer niedrigeren Programmschicht aufbauen.

Der Konferenzartikel "Asynchronous Remote Operation Execution in Distributed Systems" von E. Walker et al, Proceedings of the International Conference on Distributed Computing System 1990 S.253-259, beschreibt ein Verfahren asynchroner Interprozess-Kommunikation, die es einem aufrufenden Prozess ermöglicht, während der Bearbeitung eines Remote-Aufrufs (RPC) weiterzuarbeiten.
Dazu wird der Remote-Aufruf in zwei Teile geteilt, die getrennt abgearbeitet werden können. Ein erster Teil leitet den Remote-Aufruf ein und erzeugt ein als future bezeichneten Rückgabewert, der dann vom zweiten Teil benutzt wird, um das Ergebnis abzurufen. Beide RPC-Teile müssen vom aufrufenden Prozess abgearbeitet werden.

In dem Artikel "Management von SDH-Netzelementen: eine Anwendung der Informationsmodellierung", M.P. Bosse et al., Elektrisches Nachrichtenwesen 4. Quartal 1993, S.329-338, ist der Aufbau eines Steuerprogrammes für ein Netzwerkmanagementsystem eines synchronen digitalen Nachrichtenübertragungssystems für SDH beschrieben. Das Steuerprogramm besteht aus verschiedenen, hierarchisch strukturierten Programmschichten. Zu diesen Programmschichten zählen eine Netzschicht und eine Elementschicht. In dem Artikel wird auch erwähnt, daß das Netzwerkmanagementsystem über Datenbankfunktionen verfügt. Die Kommunikation zwischen den Programmschichten erfolgt über eine festgelegte, als Q3 bezeichnete Schnittstelle.

Entsprechend dem Artikel "Technologie der SDH-Netzelemente: die Software-Platform" von S. Colombo et al., Elektrisches Nachrichtenwesen 4. Quartal 1993, S.322-328, ist die Elementschicht ebenfalls ein nach dem mehrschichtigen Aufbau strukturiertes Steuerungsprogramm: In einer ersten Programmschicht sind die Netzelementfunktionen in Form von verwalteten Objekten angesiedelt. Diese Programmschicht baut auf Funktionen auf, die von der als virtuelles Hardwaremodul bezeichneten Programmschicht geboten werden. Darunter befindet sich die On-Board-Controller-Software, die dann schließlich auf die SDH-Hardware zugreift. Die erste Programmschicht verfügt über einen Dauerspeicher zur Speicherung von Konfigurationsparametern (verwalteten Objekten) in einer als Persistency bezeichneten Datenbank.

Bei dem geschilderten mehrschichtigen Aufbau ist eine Kommunikation zwischen angrenzenden Programmschichten erforderlich: Eine höhere Programmschicht muß Anforderungen an eine niedrigere Programmschicht weiterleiten, die niedrigere Programmschicht muß eine Bestätigung für die Ausführung der Anforderung und gegebenenfalls ein Ergebnis zurückliefern. Üblicherweise wartet eine höhere Programmschicht auf die Bestätigung und die untere Programmschicht sendet die Bestätigung erst nach erfolgreicher Ausführung der Anforderung.

Bei dieser Vorgehensweise besteht die Schwierigkeit, daß bei einem mehrschichtigen Aufbau das ganze System blockiert werden kann, wenn eine höhere Programmschicht auf eine Bestätigung von einer unteren Programmschicht wartet, die untere Programmschicht jedoch gerade beschäftigt ist und zur Abarbeitung der von der höheren Programmschicht empfangenen Anforderung nicht kommt. Der Durchsatz durch ein solches mehrschichtiges Steuerprogramm ist also durch die Geschwindingkeit der langsamsten Schicht begrenzt. Auch eine Entkopplung der Programmschichten mittels Warteschlangen bringt hier keine prinzipielle Verbesserung, da Warteschlangen überlaufen können, z.B. bei Ausfall einer Programmschicht aufgrund eines aufgetretenen Fehlers.

Aufgabe der Erfindung ist es, ein Verfahren zum Betrieb eines prozessorgesteuerten Netzwerkmanagementsystems, sowie ein prozessorgesteuertes Netzwerkmanagementsystems anzugeben, bei denen eine Blockierung aufgrund einer beschäftigten oder ausgefallenen Programmschicht nicht auftreten kann.

Die Aufgabe wird hinsichtlich des Verfahrens gelöst durch die Merkmale des Anspruchs 1 und hinsichtlich des Systems durch die Merkmale des Anspruchs 5.
Vorteilhafte Ausgestaltungen sind den abhängigen Ansprüchen zu entnehmen.

Ein Vorteil der Erfindung besteht darin, daß die Verfügbarkeit sowie die Robustheit und Überlebensfähigkeit im Falle eines Fehlers eines erfindungsgemäßen Systems verbessert wird.

Ein weiterer Vorteil ist, daß die Leistungsfähigkeit eines erfindungsgemäßen Systems verbessert wird, da mehrere Anforderungen in einer Programmschicht zusammengefaßt und zusammen bearbeitet werden können. Hinzu kommt, daß der Durchsatz durch die einzelnen Programmschichten nicht von der Bearbeitungsgeschwindigkeit der langsamsten Programmschicht begrenzt wird.

Als weiterer Vorteil erweist sich, daß das erfindungsgemäße System auch bei Totalausfall einer mittleren oder unteren Programmschicht zumindest nach außen hin bedienbar bleibt. Als Spezialfall eines Totalausfalles ist hier anzuführen, daß ein Teil des Systems abgeschaltet oder nicht angeschlossen ist. Die Erfindung ermöglicht damit eine transparente Off-Line-Konfigurierung erfindungsgemäßer Systeme. Eine bevorzugte Anwendung der Erfindung liegt im Bereich des Netzwerkmanagements als Netzwerkmanagementsystem eines Telekommunikationsnetzwerkes oder als Steuerungseinrichtung eines Netzelementes eines Telekommunikationsnetzwerkes.

Die Erfindung wird im folgenden anhand der Figuren 1 bis 3 in einem Ausführungsbeispiel näher beschrieben. Es zeigt:
- Figur 1: den schematischen Aufbau eines erfindungsgemäßen Systems,
- Figur 2: den Datenfluß durch eine Programmschicht eines erfindungsgemäßen Systems und
- Figur 3: ein Flußdiagramm des erfindungsgemäßen Verfahrens.

Um einzelne Programmschichten eines Steuerprogrammes im zeitlichen Ablauf zu entkopeln wird erfindungsgemäß ein asynchroner Ansatz gewählt. Dabei besteht ein Grundgedanke der Erfindung darin, eine Anforderung zunächst in einer höheren Programmschicht lokal zu bearbeiten und eine Bestätigung zurückzusenden und die Anforderung anschließend an eine niedrigere Programmschicht zur weiteren Bearbeitung weiterzuleiten. Die Aussage der Bestätigung erhält dadurch den Charakter eines Versprechens, für die Ausführung der Anforderung Sorge zu tragen. Sie hat daher nicht länger die Aussagekraft, daß die Anforderung erfolgreich abgearbeitet wurde, sondern bestätigt den Erhalt der Anforderung und verspricht diese abzuarbeiten. Durch diese Maßnahmen wird eine wirksame, vollständige Entkopplung der Programmschichten erreicht.

Ein Benutzer erhält erfindungsgemäß auf eine Anforderung als Bestätigung ein "OK" zurück, bevor die Anforderung tatsächlich ausgeführt wurde. Besonders vorteilhaft ist hierbei, wenn die Anforderung in einer aktuellen Programmschicht logisch und sematisch geprüft wird. Dann ist sichergestellt, daß die Anforderung zumindest prinzipiell ausführbar ist und die Bestätigung stellt dann eine Zusicherung der Durchführung dar.

Damit eine lokale Bearbeitung der Anforderung durchgeführt werden kann, verfügen die Programmschichten über eigene Speicher, in denen die aktuellen Konfigurationsparameter der jeweiligen Schicht abgespeichert und gesichert sind. Unter Konfigurationsparametern werden in diesem Zusammenhang auch Ereignis- und Zustandsdaten der jeweiligen Programmschicht verstanden. Die Speicher der Programmschichten sind logisch getrennte Speicher, die jedoch physikalisch in der selben Speichervorrichtung, beispielsweise einem RAM, einem EEPROM, einer Festplatte oder einem anderen Datenträger, enthalten sein können. Vorzugsweise ist der Speicher zu einer Datenbank strukturiert, in der die Konfigurationsparameter abgelegt sind. Das Steuerprogramm kann auch eine komplexe Steuersoftware sein, die aus mehreren Programmodulen besteht, welche als verteilte Anwendung auf verschiedenen Prozessoren ausgeführt werden.

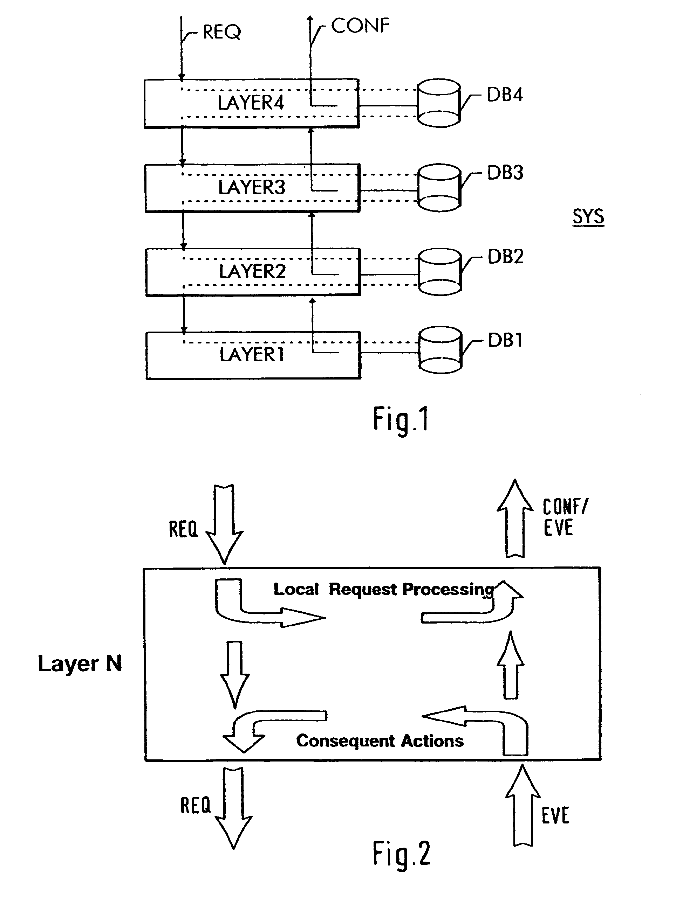

In dem in Figur 1 gezeigten Ausführungsbeispiel besteht das erfindungsgemäße System SYS aus vier Programmschichten LAYER1 bis LAYER4. Die Programmschichten verfügen jeweils über eine Datenbank DB1 bis DB4. In den Datenbanken sind Konfigurationsparameter der zugehörigen Programmschicht gespeichert. Ein Zugriff auf das System SYS läuft so ab, daß eine Anforderung REQ an die höchste Programmschicht LAYER4 geleitet wird. Dort geschieht eine lokale Bearbeitung der Anforderungen REQ indem die von der Anforderung betroffenen Konfigurationsparameter in der Datenbank DB4 entsprechend der Anforderung aktualisiert werden. Ist dies geschehen, dann wird als Antwort auf die Anforderung REQ eine Bestätigung CONF zurückgeschickt.

Ist eine Bearbeitung der Anforderung REQ in der nächst niedrigeren Programmschicht LAYER3 erforderlich, so wird die Anforderung nun an die Programmschicht LAYER3 weitergeleitet. Dort geschehen wieder dieselben Schritte: Lokale Bearbeitung der Anforderungen indem die betroffenen Konfigurationsparameter in der Datenbank DB3 aktualisiert werden und anschließend Zurückschicken einer Bestätigung.

Das Weiterleiten an die jeweils nächst niedrigere Programmschicht geschieht solange, bis die niedrigste zur Ausführung der Anforderung notwendige Programmschicht erreicht ist.

Am Beispiel eines Netzwerkmanagementsystems ist dies leicht verständlich: Die Programmschicht LAYER4 ist eine Anwenderschicht in einer zentralen Netzwerkmanagementeinrichtung. Die nächst niedrigere Programmschicht LAYER3 ist die sogenannte MIB (*Management Information Base*, wie in ITU-T X.720 standardisiert) zusammen mit einem Softwarerahmen (Framework) in einer Steuerungseinrichtung eines Netzelementes, beispielsweise eines digitalen Crossconnects. Die wiederum nächst niedrigere Programmschicht LAYER2 ist ein virtuelles Hardwaremodul VHM, welches die Umsetzung zwischen der MIB und der Hardware durchführt. Die unterste Programmschicht LAYER1 ist die Firmware, die sich auf den einzelnen Leiterplatten (Boards) des Crossconnects befindet und die die sogenannten On-Board-Controller (OBC) steuert.

Die Anforderung eines Benutzers, einen bestimmten Verbindungsparameter einer bestehenden Verbindung zu verändern, muß von allen vier Programmschichten bearbeitet werden, um die Anforderung auszuführen. Hingegen kann eine Anforderung, einen Verbindungsparameter einer bestehenden Verbindung zu lesen bereits von der ersten oder der zweiten Programmschicht erfüllt werden, je nach Art des Parameters.

Ein besonderer Vorteil der Erfindung ist, daß mehrere Anforderungen in einer Programmschicht zusammengefaßt und zusammen bearbeitet werden können. Werden beispielsweise in der obersten Programmschicht mehrere Anforderungen empfangen, welche alle einen bestimmten Parameter direkt oder indirekt ändern wollen, so wird in der obersten Programmschicht tatsächlich der bestimmte Parameter mehrmals hintereinander auf einen neuen Wert gesetzt. Dies geschieht jedoch nur lokal. Bei der Weiterleitung können die mehreren Anforderungen zu einer einzigen zusammengefaßt werden, so daß in den darunterliegenden Schichten jeweil nur noch eine einzige Änderung des betreffenden Parameters erfolgen muß. Dieses Vorgehen ist besonders im Falle einer Off-line-Konfigurierung des erfindungsgemäßen Systems vorteilhaft, wenn also die unteren Programmschichten nicht verfügbar sind. In diesem Falle werden alle Änderungen in der lokalen Datenbank vorgenommen um nach Inbetriebnahme des ganzen Systems die durch die erfolgte Off-line-Konfigurierung notwendigen Änderungen in einer einzigen Anforderung an die unteren Programmschichten weiterzuleiten.

Ereignisberichte können Folgeaktionen an der nächst niedrigeren Schicht auslösen. Daraus ergibt sich als ein weiterer Vorteil der Erfindung, daß eine Anforderung zur Ausführung der Folgeaktion an die nächst niedrigere Schicht gesendet werden kann, auch wenn die nächst höhere Schicht, an die der Ereignisbericht weitergeleitet werden soll, diese Ereignisberichte momentan nicht verarbeiten oder entgegennehmen kann. Mehrere Ereignisberichte können zusammengefaßt werden, wenn die höhere Programmschicht, an die diese weitergeleitet werden sollen, längere Zeit keine Berichte entgegennehmen kann. Dadurch wird jeweils nur der aktuelle Zustand weitergeleitet. Ereignisse werden also lokal verarbeitet und bei der Weiterleitung nach Möglichkeit zusammengefaßt. Es handelt sich hierbei um adaptive Ereignisunterdrückung.

In Figur 2 ist der Datenfluß in einer Programmschicht schematisch gezeigt. Die Programmschicht LAYERN empfängt Anforderungen REQ von der nächst höheren Programmschicht, bearbeitet die Anforderung lokal und sendet als Antwort eine Bestätigung CONF zurück. Danach wird die Anforderung REQ an die nächst niedrigere Programmschicht weitergeleitet. In der Gegenrichtung empfängt die Programmschicht LAYERN von der nächst niedrigeren Programmschicht Ereignisberichte EVE (engl: event reports). Bestimmte Ereignisse können Folgeaktionen erfordern, so daß in der Programmschicht LAYERN eine Bearbeitung des Ereignisberichtes in der Form durchgeführt wird, daß eine Anforderung REQ an die darunterliegende Programmschicht gesendet wird, die Folgeaktion auszuführen. Aufgrund der Ereignisberichte wird falls notwendig ebenfalls die interne Datenbank aktualisiert. Dann wird der Ereignisbericht EVE an die darüberliegende Programmschicht weitergeleitet.

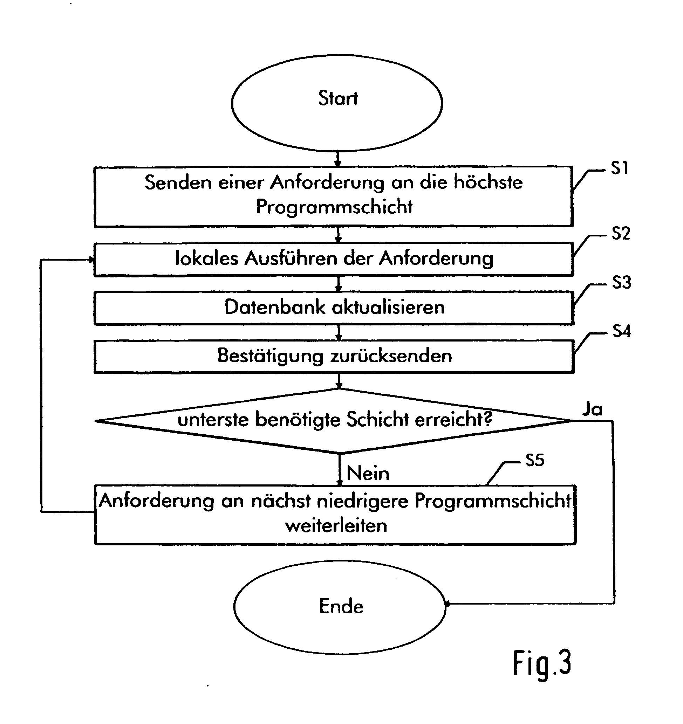

In Figur 3 ist ein Flußdiagramm des erfindungsgemäßen Verfahrens abgebildet. Das Verfahren enthält folgende Schritte:
- Schritt S1:: Auf das System wird zugegriffen, indem eine Anforderung an die höchste Programmschicht gesendet wird. Die höchste Programmschicht wird dadurch zur aktuelle Programmschicht.
- Schritt S2:: Die Anforderung wird in der aktuellen Programmschicht ausgeführt.
- Schritt S3:: Die Konfigurationsdaten in dem Speicher, vorzugsweise der Datenbank, werden entsprechend der Anforderung geändert.
- Schritt S4:: Es wird als Antwort eine Bestätigung zurückgesendet.
- Schritt S5:: Wenn die niedrigste zur Ausführung der Anforderung benötigte Programmschicht noch nicht erreicht ist, wird die Anforderung zur weiteren Bearbeitung an die nächst niedrigere Programmschicht weitergeleitet. Die nächst niedrigere Programmschicht wird dadurch zur aktuellen Programmschicht. Dann werden die Schritte S2 bis S5 wiederholt.

Als aktuelle Programmschicht wird in diesem Zusammenhang stets die Programmschicht bezeichnet, die die Anforderung aktuell lokal bearbeitet.

## Patentansprüche

1. Verfahren zum Betrieb eines prozessorgesteuerten Systems (SYS) zur Steuerung eines Telekommunikationsnetzes oder eines einzelnen Netzelementes eines Telekommunikationsnetzes mittels eines Steuerprogrammes, welches aus mehreren funktionalen Programmschichten (LAYER1-4) besteht, wobei jede Programmschicht Dienste bietet und zumindest ein Teil der Dienste einer höheren Programmschicht auf Dienste einer niedrigeren Programmschicht aufbauen
**dadurch gekennzeichnet, daß**
das Telekommunikationsnetz oder das einzelne Netzelement auf dem Standard der Synchronen Digitalen Hierarchie (SDH) basiert, und eine von einer höheren Programmschicht empfangene Anforderung (REQ) in einer direkt darunter liegenden, nächst niedrigeren Programmschicht lokal bearbeitet und durch Zurücksenden einer Bestätigung (CONF) beantwortet wird, bevor die Anforderung an eine wiederum direkt darunter liegende, nächst niedrigere Programmschicht weitergeleitet wird.

2. Verfahren nach Anspruch 1, bei dem jede Programmschicht (LAYER1-4) über einen Speicher (DB1-4) verfügt, in dem Konfigurationsdaten der Programmschicht gespeichert sind.

3. Verfahren nach Anspruch 2, bei dem folgende Schritte ausgeführt werden:
a) Zugreifen auf das prozessorgesteuerte System (SYS) durch Senden der Anforderung (REQ) an die höchste Programmschicht (LAYER4), wodurch die höchste Programmschicht zur aktuellen Programmschicht wird,
b) Ausführen der Anforderung (REQ) in der aktuellen Programmschicht und Aktualisieren der Konfigurationsdaten in dem Speicher (DB4) der aktuellen Programmschicht entsprechend der Anforderung,
c) Zurücksenden einer Bestätigung (CONF),
d) Weiterleiten der Anforderung (REQ) an die nächst niedrigere Programmschicht (LAYER3) wodurch die nächst niedrigere Programmschicht zur aktuellen Programmschicht wird, und
e) Wiederholen der Schritte b) bis d) bis die niedrigste zur Ausführung der Anforderung (REQ) benötigte Programmschicht erreicht ist.

4. Verfahren nach Anspruch 3, bei dem
- in der Gegenrichtung von einer niedrigeren Programmschicht bei Eintritt eines Ereignisses ein Ereignisbericht empfangen wird,
- die Konfigurationsdaten im Speicher entsprechend dem Ereignisbericht aktualisiert werden,
- eine lokale Bearbeitung des Ereignisberichts durchgeführt wird, in der Form, daß eine Anforderung zur Ausführung einer Folgeaktion an die nächst niedrigere Programmschicht gesendet wird, wenn eine solche Folgeaktion aufgrund des Ereignisses notwendig ist, und
- die Ereignisberichte an die nächst höhere Programmschicht weitergeleitet werden.

5. Prozessorgesteuertes System (SYS) zur Steuerung eines Telekommunikationsnetzes oder eines einzelnen Netzelementes eines Telekommunikationsnetzes mittels eines Steuerprogrammes, welches aus mehreren funktionalen Programmschichten (LAYER1-4) besteht und bei dem jede Programmschicht Dienste bietet und zumindest ein Teil der Dienste einer höheren Programmschicht auf Dienste einer niedrigeren Programmschicht aufbauen,
**dadurch gekennzeichnet, daß**
das Telekommunikationsnetz oder das einzelne Netzelement auf dem Standard der Synchronen Digitalen Hierarchie (SDH) basiert, und die Programmschichten (LAYER1-4) asynchron miteinander verbunden sind, in der Art, daß eine von einer höheren Programmschicht empfangene Anforderung (REQ) erst in einer direkt darunter liegenden, nächst niedrigeren Programmschicht lokal bearbeitet und durch Zurücksenden einer Bestätigung (CONF) beantwortet wird, bevor die Anforderung (REQ) an eine wiederum direkt darunter liegende, nächst niedrigere Programmschicht weitergeleitet wird.

6. System (SYS) nach Anspruch 5, bei dem jede Programmschicht (LAYER1-4) über einen Speicher (DB1-4) verfügt, in dem Konfigurationsdaten der Programmschicht gespeichert sind.

7. System (SYS) nach Anspruch 6, bei dem die Programmschichten (LAYER1-4) so miteinander gekoppelt sind, daß
- eine Anforderung zunächst in einer höheren Programmschicht (LAYER4) ausgeführt wird,
- die Konfigurationsdaten in dem Speicher (DB4) der höheren Programmschicht (LAYER4) entsprechend der Anforderung (REQ) aktualisiert werden und
- die Bestätigung (CONF) zurückgesendet wird, bevor die Anforderung (REQ) zu der nächst niedrigeren Programmschicht zur weiteren Ausführung weitergeleitet wird.

8. System (SYS) nach Anspruch 6, bei dem die Speicher (DB1-4) als Datenbanken strukturiert sind.

## Claims

1. A method of operating a processor-controlled system (SYS) for controlling a telecommunication network or an individual network element of a telecommunication network by means of a control program, which consists of a plurality of functional program layers (LAYER1-4), each program layer offering services and at least some of the services of a higher program layer building on services of a lower program layer
**characterised in that**
the telecommunication network or the individual network element is based on the Synchronous Digital Hierarchy (SDH) standard, and a request (REQ) received from a higher program layer is processed locally in a next lower program layer situated directly therebelow and is responded to by sending back a confirmation (CONF), before the request is forwarded to a next lower program layer again situated directly therebelow.

2. A method according to claim 1, in which each program layer (LAYER1-4) has a memory (DB1-4), in which configuration data for the program layer are stored.

3. A method according to claim 2, in which the following steps are executed:
a) accessing the processor-controlled system (SYS) by sending the request (REQ) to the highest program layer (LAYER4), whereby the highest program layer becomes the current program layer,
b) executing the request (REQ) in the current program layer and updating the configuration data in the memory (DB4) of the current program layer in accordance with the request,
c) sending back a confirmation (CONF),
d) forwarding the request (REQ) to the next lower program layer (LAYER3), whereby the next lower program layer becomes the current program layer, and
e) repeating steps b) to d) until the lowest program layer needed to execute the request (REQ) is reached.

4. A method according to claim 3, in which,
- when an event occurs, an event report is received in the opposite direction from a lower program layer,
- the configuration data in the memory are updated in accordance with the event report,
- local processing of the event report is carried out, in that a request for execution of a consequent action is sent to the next lower program layer if such a consequent action is needed as a result of the event, and
- the event reports are forwarded to the next higher program layer,

5. A processor-controlled system (SYS) for controlling a telecommunication network or an individual network element of a telecommunication network by means of a control program, which consists of a plurality of functional program layers (LAYER1-4), each program layer offering services and at least some of the services of a higher program layer building on services of a lower program layer,
**characterised in that**
the telecommunication network or the individual network element is based on the Synchronous Digital Hierarchy (SDH) standard, and the program layers (LAYER1-4) are connected together asynchronously in such a manner that a request (REQ) received from a higher program layer is first processed locally in a next lower program layer situated directly therebelow and is responded to by sending back a confirmation (CONF), before the request is forwarded to a next lower program layer again situated directly therebelow.

6. A system (SYS) according to claim 5, In which each program layer (LAYER1-4) has a memory (DB1-4), in which configuration data for the program layer are stored.

7. A system (SYS) according to claim 6, in which the program layers (LAYER1-4) are coupled together in such a way that
- a request is initially executed in a higher program layer (LAYER4),
- the configuration data are updated in the memory (DB4) of the higher program layer (LAYER4) in accordance with the request (REQ) and
- the confirmation (CONF) is sent back before the request (REQ) is forwarded to the next lower program layer for further execution.

8. A system (SYS) according to claim 6, in which the memories (DB1-4) are structured as databases.

## Revendications

1. Procédé d'exploitation d'un système commandé par processeur (SYS) pour commander un réseau de télécommunication ou un élément de réseau individuel d'un réseau de télécommunication au moyen d'un programme de commande qui se compose de plusieurs couches de programme (LAYER 1-4) fonctionnelles, chaque couche de programme offrant des services et au moins une partie des services d'une couche de programme supérieure étant construite sur les services d'une couche de programme inférieure
**caractérisé en ce que**
le réseau de télécommunication ou l'élément de réseau individuel se basent sur la norme de hiérarchie numérique synchrone (SDH) et une demande (REQ) reçue de la part d'une couche de programme supérieure dans une couche de programme inférieure suivante qui se trouve directement au-dessous de celle-ci est traitée localement et il y est répondu en renvoyant une confirmation (CONF) avant que la demande ne soit transmise à une couche de programme inférieure suivante qui se trouve à son tour directement au-dessous.

2. Procédé selon la revendication 1, dans lequel chaque couche de programme (LAYER1-4) dispose d'une mémoire (DB1-4) dans laquelle sont enregistrées les données de configuration de la couche de programme.

3. Procédé selon la revendication 2, dans lequel les étapes suivantes sont exécutées :
a) Accès au système commandé par processeur (SYS) en envoyant la demande (REQ) à la couche de programme la plus élevée (LAYER4), la couche de programme la plus élevée devenant ainsi la couche de programme courante,
b) Exécution de la demande (REQ) dans la couche de programme courante et actualisation des données de configuration dans la mémoire (DB4) de la couche de programme courante conformément à la demande,
c) Renvoi d'une confirmation (CONF),
d) Transmission de la demande (REQ) à la couche de programme inférieure suivante (LAYER3), la couche de programme inférieure suivante devenant ainsi la couche de programme courante, et
e) Répétition des étapes b) à d) jusqu'à ce que la couche de programme la plus basse nécessaire pour exécuter la demande (REQ) soit atteinte.

4. Procédé selon la revendication 3. dans lequel
- un rapport d'événement est reçu dans le sens inverse d'une couche de programme inférieure lorsqu'un événement se produit,
- les données de configuration dans la mémoire sont actualisées conformément au rapport d'événement,
- un traitement local du rapport d'événement est effectué en ce qu'une demande d'exécution d'une action conséquente est envoyée à la couche de programme inférieure suivante lorsqu'une telle action conséquence est nécessaire en raison de l'événement, et
- les rapports d'événement sont transmis à la couche de programme supérieure suivante.

5. Système commandé par processeur (SYS) destiné à commander un un réseau de télécommunication ou un élément de réseau individuel d'un réseau de télécommunication au moyen d'un programme de commande qui se compose de plusieurs couches de programme (LAYER 1-4) fonctionnelles, chaque couche de programme offrant des services et au moins une partie des services d'une couche de programme supérieure étant construite sur les services d'une couche de programme inférieure,
**caractérisé en ce que**
le réseau de télécommunication ou l'élément de réseau individuel se basent sur la norme de hiérarchie numérique synchrone (SDH) et les couches de programme (LAYER 1-4) sont connectées entre elles de manière asynchrone de sorte qu'une demande (REQ) reçue de la part d'une couche de programme supérieure dans une couche de programme inférieure suivante qui se trouve directement au-dessous de celle-ci est traitée localement et il y est répondu en renvoyant une confirmation (CONF) avant que la demande (REQ) ne soit transmise à une couche de programme inférieure suivante qui se trouve à son tour directement au-dessous.

6. Système (SYS) selon la revendication 5, dans lequel chaque couche de programme (LAYER1-4) dispose d'une mémoire (DB1-4) dans laquelle sont enregistrées les données de configuration de la couche de programme.

7. Système (SYS) selon la revendication 6, dans lequel les couches de programme (LAYER 1-4) sont connectées entre elles de telle sorte que
- une demande est tout d'abord exécutée dans une couche de programme supérieure (LAYER4),
- les données de configuration dans la mémoire (DB4) de la couche de programme supérieure (LAYER4) sont actualisées conformément à la demande (REQ) et
- la confirmation (CONF) est renvoyée avant que la demande (REQ) soit transmise à la couche de programme inférieure suivante en vue de la poursuite de son exécution.

8. Système (SYS) selon la revendication 6, dans lequel les mémoires (DB1-4) sont structurées sous la forme de bases de données.
